# EUROPEAN PATENT SPECIFICATION

(11) **EP 1 202 793 B1**
(45) Date of publication and mention of the grant of the patent: **22.10.2008**
(21) Application number: 99930475.1
(22) Date of filing: 22.06.1999
(51) Int. Cl.: B01D 63/10, B01D 65/02, B01D 69/10

(54) **System and method for back-flushing a spiral wound membrane element**
System und Verfahren zur Rückspülung eines spiralförmig gewickelten Membranelements
Système et procédé pour rincer un élément de membrane enroulé en spirale par écoulement inverse

(43) Date of publication of application: 08.05.2002
(73) Proprietor: Trisep Corporation, Goleta, CA 93117 (US)
(72) Inventor: KNAPPE, Peter, H., Santa Barbara, CA 93105 (US); KREMEN, Seymour, S., Coronado, CA 92118 (US); THOMASON, Hans, A., E-17310 Lloret de Mar (ES); TANNER, Matthew, B., Ventura, CA 93003 (US)
(74) Representative: Müller, Wolfram Hubertus
(86) International application number: PCT/US1999/013934
(87) International publication number: WO 2000/078436

(56) References cited:
- EP-A- 0 581 544
- EP-A- 0 584 411
- EP-A- 0 669 159
- WO-A-95/32041
- US-A- 3 912 624
- US-A- 4 767 539
- US-A- 5 236 643
- US-A- 5 352 362

## Description

### BACKGROUND OF THE INVENTION

Membrane fouling is generally recognized as the outstanding problem in modem membrane separations. A full discussion of the problems, specifically associated with ultrafiltration, can be found in "Fifteen Years of Ultrafiltration" by Micheals, A.S. in Ultrafiltration Membranes and Applications edited by A.R. Cooper (American Chemical Society Symposium, Washington, 9-14 Sept. 1979, Plenum Press, New York (1980); ISBN 0-306-40548-2) where it is stated that "the problems of reduced throughput, capacity, increased power consumption, compromised separation capability, and reduced membrane service lifetime associated with macro-, solute- and colloid-fouling of ultrafiltration membranes have stubbornly resisted adequate solution despite ten years of engineering experience in pilot and full-scale industrial situations."

According to Micheals, back-flushing by reverse flow of permeate in hollow-fiber membrane modules, significantly aids in unplugging of membrane pores and detachment of adhering deposits. However, there are only two specific examples of permeate back-flushing described in that text and these concern filtration of tap water and of electro-deposition paints emulsified in water.

As set forth at pages 109 to 227 of the above text, back-flushing of hollow fibers with permeate is used where operating transmembrane pressures are only about one atmosphere so that particles are not driven hard into membrane pores during the filtering process. As indicated above, permeate back-flushing has been used where the fouling species are in liquid paint emulsion droplets as these species do not wedge into the membrane pores as do solids. As the transmembrane flux is often only five to twenty liters per square meter per hour (L/m² hr), the corresponding fluid velocity is only a few millimeters per hour and there is, therefore, no possibility of a high velocity cleaning action.

Permeate back-flushing is, in essence, a recycling process and, thus, a sacrifice of production rate is only justified when the cleaning effect is significant. Some sticky natural wastes (such as brewing residues, starch, and egg) are not removed to any appreciable extent by permeate back-flushing. According to Micheals, permeate back-flushing is, by definition, a purely hydraulic flow through totally wetted pores of the ultrafiltration membrane.

In U.S. Patent No. 4,767,539, Ford describes an improved method of back-flushing hollow fiber filters which uses a gas back-flush medium. Ford's invention uses the back-flush gas at a pressure of about 500 kilopascals to swell the fiber from the inside and erupt around the elastic openings. This gas back-flush resulted in better removal of foulants from the surface of the membrane than did the standard permeate back-flush. The penetration of gas into the pores of a membrane is resisted by the surface tension forces of the contained wall-wetting liquid. Indeed, surface tension is conveniently measured by the breakthrough pressure needed to force a bubble out of a submerged orifice. For common systems (such as oil in hydrophobic pores or water in hydrophilic pores) the breakthrough pressure required ranges from ten kilopascals to a thousand kilopascals. The breakthrough pressures are much higher than the usual operating pressures of the filter.

In U.S. Patent No. 5,248,424, Cote describes a frame-less array of hollow fiber membranes and a method of maintaining a clean fiber surface while filtering a substrate and withdrawing permeate. A scrubbing gas is used to sway the free floating fibers and thus minimizes or eliminates the build-up of foulants and biological organisms on the membrane surface.

Historically, difficult feed solutions with high organic and suspended solids have been treated with capillary (0.3 - 1.0 mm dia) or tubular element designs. While these designs are effective, they have a number of limitations, notably, the materials of construction must be chosen not just for the permeability and rejection characteristics needed to perform separations, but also for mechanical strength to withstand the feed pressures required for operation, including back-flush. The hollow fiber and tubular constructions also have relatively low packing densities of active membrane area, thus the cost per unit area is high.

All of the above-mentioned devices are manufactured in a hollow fiber configuration. While this design has many advantages, it is not as versatile and cost effective as spiral wound membrane designs. Spiral wound membrane filtration elements with microfiltration (MF), ultrafiltration (UF), nanofiltration (NF), and reverse osmosis (RO) membranes, are used for treating drinking or process water that is relatively low in suspended solids and organic foulants.

Increasingly, more and more difficult feed solutions are being treated with spiral wound elements. Spiral wound elements have several advantages over hollow fiber and tubular elements. The membranes are cast on a woven or non-woven support substrate which lends structural strength and allows easy membrane formation. Support fabric substrates allow membranes to be formed as composites, with the base membrane providing a strong and defect free support surface over which can be coated a thin barrier layer that dictates the transport properties. Also, the spiral wound configuration has a high packing density, has a low production cost, is easily scaled up to large systems, and replacement is easy and inexpensive. In most current commercial applications using UF, NF, or RO where spiral elements can operate effectively, they have become the design of choice due to the above mentioned benefits.

However, most spiral wound elements can not be back-flushed due to failure of the adhesive seals and delamination of the membrane film from the support fabric substrate. A recent survey of warranty literature from manufacturers of the large majority of spiral wound element filters all contain strong, unequivocal language reaffirming that any back pressure would damage the elements and are conclusive grounds for voiding the membrane element warranty. A design for spiral wound elements that would allow for effective back-flushing is needed.

Document JP-A-11104469 describes a filtering device comprising a spiral wound membrane element. A plurality of flat membranes are wound spirally as to provide a defined membrane interval to avoid clogging of the flow path.

Document JP-A-10230144 describes a spiral membrane element configured as a dead-end filtration device. The membrane element can be back-flushed in order to remove particles from the filtering membranes.

### SUMMARY OF THE INVENTION

The present invention provides for a back-flush system for a spiral wound membrane element with the features of claim 1 and a method of back-flushing a spiral wound membrane element with the features of claim 7.

A spiral wound membrane filtration element capable ofbeing back-flushed preferably has a permeate carrier sheet and a membrane filter layer sheet that is adhesively bonded to the permeate carrier sheet. The membrane filter layer sheet is normally folded in half, over a feed spacer sheet. An active membrane film side of the membrane filter layer sheet faces both sides of the feed spacer. The feed spacer sheet, the membrane filter layer sheets, and the permeate carrier sheet are wrapped around a permeate collection tube.

The membrane filter layer sheet for example has a support substrate with a Frazier air permeability between 5.07 and 50.7 1/(m²·s) (1 and 10 cfm/ft²). The membrane filter layer sheet may be homogenous or asymmetric. For a homogenous membrane filter layer sheet, polymeric film may be encased around a support substrate or be a self-supporting polymeric film. In an asymmetric membrane filter layer sheet, the polymer film is cast on top of a support substrate, and adequately bonded thereto in order to eliminate delamination during a back-flush cycle.

The permeate carrier fabric sheet acts as a conduit that allows the part of the feed solution which permeates the membrane filter layer sheet to exit the element via the permeate collection tube which is in the center of the element. Each membrane filter layer sheet is bonded to the permeate carrier fabric sheet on the three sides not adjacent to the permeate collection tube with an adhesive capable of retaining the seal throughout a back-flushing of the element.

A method of making a back-flushable spiral wound membrane filtration element for example comprises forming a membrane filter layer sheet, cutting the membrane filter layer sheet to a desired length, placing a cut piece of a feed spacer sheet on top of the membrane filter layer sheet, the width of the feed spacer sheet being approximately half the width of the membrane filter layer sheet; folding the membrane filter layer sheet over the feed spacer so that the feed spacer sheet is sandwiched between two layers of the membrane filter layer sheet; attaching a center side part of a permeate carrier sheet to the permeate collection tube; applying an adhesive seal on the permeate carrier sheet along sides other than the center side part; positioning the membrane filter layer sheet-feed spacer sheet sandwich over the permeate carrier sheet such that the adhesive seal bonds the membrane filter layer sheet to the permeate carrier sheet; and wrapping the permeate carrier sheet, the membrane filter layer sheet, and the feed spacer sheet around the permeate collection tube.

A method of creating a permeable membrane filter layer sheet for example comprises placing a casting solution of a certain thickness on a passing support substrate; controlling the thickness of the casting solution on the support substrate through use of a mechanical device for dispensing the casting solution; and immersing the substrate with the casting solution into a quench bath to allow removal of casting solution after an air quench time that allows formation of a thin skin on the support substrate.

### BRIEF DESCRIPTION OF THE DRAWINGS

FIG. 1 shows a spiral wound element back-flush system not according to the invention employing a single element pressure tube mounted in a vertical position;

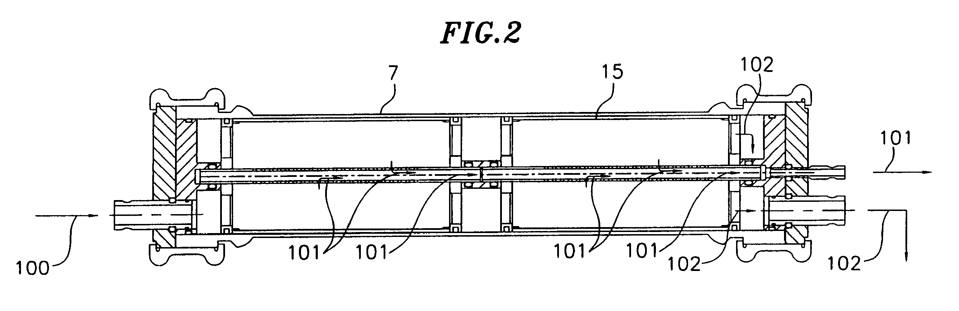

FIG. 2 shows a cross-sectional view of multiple filters in an element pressure tube;

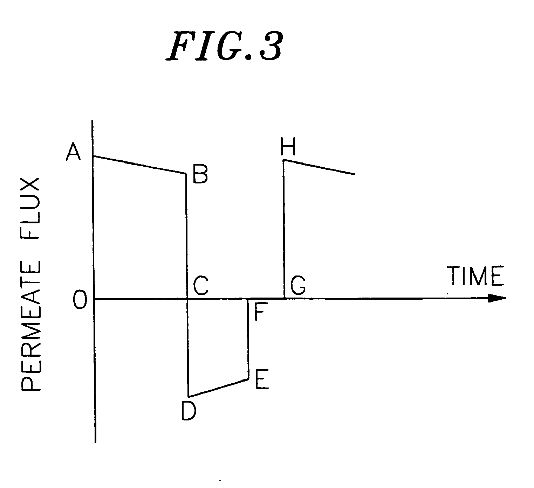

FIG. 3 shows the relationship of permeate flux versus time operating sequence for a back-flushed element system according to one embodiment of the invention;
FIG. 4 shows a perspective view of how a membrane filter layer sheet, a permeate carrier fabric sheet, and a feed spacer sheet are arranged around a permeate collection tube;
FIG. 5 shows a side view of a process system wherein the membrane film is cast onto a support substrate; and
FIG. 6 shows an embodiment of the back-flush system using an element submersed vertically in a tank with a vacuum being applied as the driving force to remove permeate.

### DETAILED DESCRIPTION

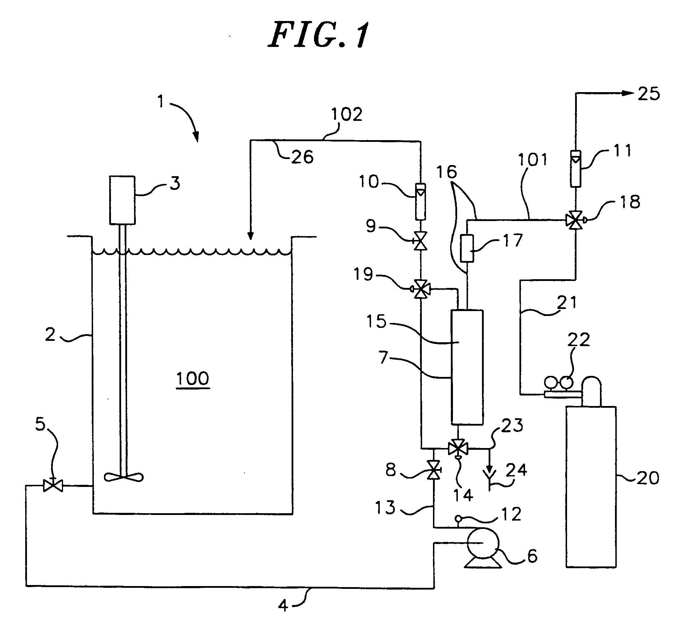

An example of a spiral element back-flush system is shown in Fig. 1, wherein the example is not an embodiment of the invention. A spiral element back-flush system 1 has a feed tank 2, a feed pump 6, an element pressure tube 7, and a compressed gas tank 20. Element pressure tube 7 is preferably mounted in a vertical position. Feed tank 2 contains a feed solution 100. Feed tank 2 can be replaced by a pipe from a process stream in practical applications. In this example, an electric mixer 3 is shown that is used to keep the feed tank well mixed. Mixer 3 may or may not be required for commercial applications depending on the feed solution. Feed solution 100 is withdrawn from tank 2 via a pump suction pipe 4 to feed pump 6. Feed pump 6 pumps feed solution 100 through element pressure tube 7 via a feed pipe 13.

Feed solution 100 then enters element pressure tube 7 where a portion of feed solution 100 permeates a membrane filter element 15, which portion then exits pressure tube 7 to a holding tank or process stream 25 via a permeate pipe 16. The portion of feed solution 100 that permeates element 15 is permeate 101. The portion of feed solution 100 that does not pass through membrane filter element 15 is a concentrate (or brine solution) 102. Concentrate 102 that exits pressure tube 7 is directed to a holding tank or via concentrate pipe 26 back to feed tank 2 to be recycled back through filter 15.

Preferably, pump suction pipe 4 contains a shut off valve 5 that can be used to isolate pump 6 for maintenance purposes. During normal operation, the pressurized feed solution from feed pump 6 is pumped to element pressure tube 7 through a feed diverter valve 14. The flow rate to pressure tube 7 can be controlled with a feed valve 8 and a concentrate valve 9. A feed pressure gauge 12 along feed pipe 13 is used to measure the feed pressure from pump 6.

Concentrate 102 is removed from the top of element pressure tube 7. Along concentrate pipe 26, concentrate 102 passes through a concentrate diverter valve 19, concentrate valve 9, and a concentrate flow meter 10. Concentrate flow meter 10 is used to measure the concentrate flow from pressure tube 7 via concentrate pipe 26.

Permeate 101 can be removed from either the top or the bottom of pressure tube 7. Along permeate pipe 16, permeate 101 passes through a permeate accumulator 17, a permeate diverter valve 18, and a permeate flow meter 11. Permeate flow meter 11 is used to measure the permeate flow from pressure tube 7 via permeate pipe 16.

During a back-flush cycle, gas is released from compressed gas tank 20 as a back-flush fluid via both a pipe 21 and permeate pipe 16 to enter pressure tube 7. Upon exiting gas tank 20, the gas passes through a gas regulator 22, pipe 21, through permeate diverter valve 18, permeate pipe 16, permeate accumulator 17, into pressure tube 7, and eventually into a concentrate blow down line 23. The pressure on the back-flush gas in this example needs to be greater than the feed pressure on element 15 by about 69 to 207 kPa (10-30 psi), which in this example is controlled by gas regulator 22. The back flush pressure range is 34.5 to 690 kPa (5 to 100 psi). Preferably, the range is between 138 to 414 kPa (20 and 60 psi).

Optionally, during the back-flush cycle, permeate 101 (or another back flush fluid such as compressed fluid, compressed nitrogen, compressed air and/or cleaning solution) can be redirected via feed diverter valve 14 and concentrate diverter valve 19 into the top of the pressure tube 7, out the bottom thereof, and into concentrate blow down line 23. Concentrate blow down line 23 could be directed into a waste holding tank or to a drain 24. The purpose of changing the Each membrane filter layer sheet 71 is bonded to permeate carrier fabric sheet 72 with an adhesive capable of retaining the seal throughout back-flushing of the element. The seal between the membrane filter layer sheet and the permeate carrier fabric sheet is made on the three sides that are not adjacent to permeate collection tube 73, such that a center side part of permeate carrier sheet 72 corresponds with permeate collection tube 73. The layers are then wrapped up around permeate collection tube 73 to form the spiral wound element.

When all three layers are rolled up, each permeate carrier fabric sheet 72 is sandwiched between the back of membrane filter layer sheet 71 to form an envelope for the permeated water. The feed spacer sheet can have a thickness in the range of 0.05 cm to 0.25 cm (0.02" to 0.10"), but preferably is 0.1 to 0.15 cm (0.04" to 0.06") thick. The feed spacer sheet is sandwiched by membrane filter layer sheet 71 with the active membrane film side 75 facing both sides of feed spacer sheet 70. The adhesive seal that is placed around permeate carrier fabric sheet 72 allows the permeated water to flow into permeate collection tube 73 while preventing the feed solution from entering permeate carrier fabric sheet 72 without first permeating active membrane film side 75 of membrane filter layer sheet 71. The feed spacer sheet is held in place by friction. The layers are wrapped so tightly around the collection tube that the feed spacer sheet is not able to move.

To back flush the element, permeate that has collected in permeate accumulator 17 and/or the gas from tank 20 is pushed back through permeate collection tube 73 and into the filter layers of element15. The back-flush fluid is forced into permeate carrier fabric sheet 72. Back-flush fluid then moves back through membrane film side 75 of membrane filter layer sheet 71 to dislodge any sticking particles. The fluid then travels through feed spacer sheet 70 and out the bottom of pressure tube 7.

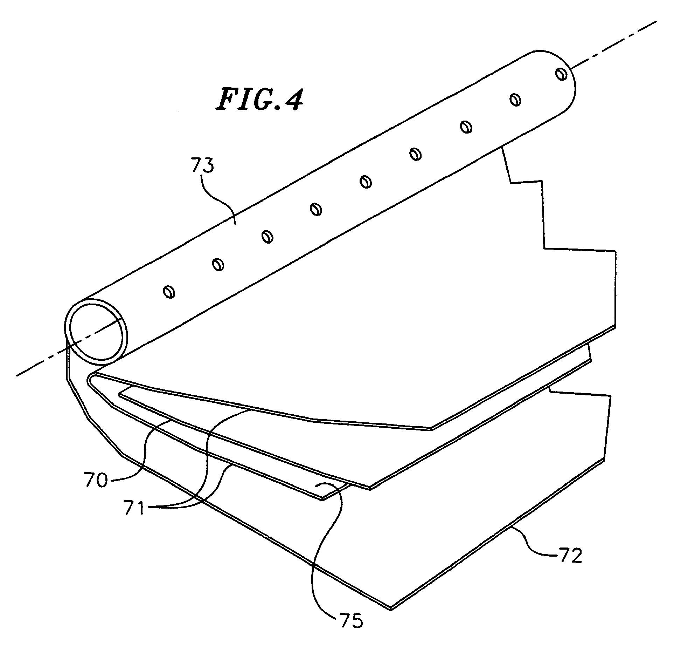

The driving pressure for these operations, which is normally present as a pressurized feed solution 100 but could also be applied as a vacuum on permeate stream101, must overcome the pressure drop through feed spacer sheet 70, and in addition, once a portion of feed solution 100 permeates the membrane filter layer sheet, it also must overcome the pressure drop through permeate carrier fabric sheet 72. Element 15 shown in FIG. 4 is the simplest element configuration. To create elements with larger capacities, multiple leaves must be used to minimize the pressure drop of permeate solution 101 through permeate carrier fabric sheet 72.

Besides delamination of membrane film 75 from support substrate 76, another area where the spiral wound elements of the prior art would fail when exposed to back-flush pressures, is at the membrane adhesive seal. This problem is especially true when trying to bond the permeate carrier fabric sheet to wet membrane filter layer sheets, because it is difficult for most polyurethane adhesives to penetrate into a saturated substrate without the isocyante functional group reacting with the water. It is important to note that the feed pressure is actually compressing the adhesive seal in normal operation and thus there is normally not a requirement for the adhesive seal to have good peel strength, only that it not allow any feed solution to bypass into the permeate collection tube.

To obviate the problem of lack of adhesion during back-flushing operation of spiral wound element filters, an adhesive has been manufactured by E.V. Roberts of Culver City, California, model number 1752. The adhesive was custom formulated to our performance specifications. The adhesive is such that, during the back flush cycle where the seals are tensioned rather than compressed, membrane filter layer sheets 71 remain sealed to permeate carrier fabric sheet 72. This adhesive gives superior penetration and peel strength, even when membrane filter layer sheet 71 is in a wet condition, such that delamination under back-flush conditions is prevented.

The characteristics of the adhesive include being a two-part polyurethane adhesive, being thixotropic, having a high viscosity, having good penetration into the support substrate, not being too sensitive to moisture (in that it can be applied to wet membrane filter layer sheets and still retain its bonding properties), and being thick enough to coat the permeate carrier fabric sheet so as not to leave gaps. The specifications of the adhesive vary depending on whether the finished membrane layer sheet is dry or wet. For example, urethanes are very reactive with water. The reaction with the urethanes will form a gas thereby leaving voids in the adhesive line. Using different isocyanate groups for wet membrane layer sheets will not form this gas.

Generally, the preferred two-part polyurethane adhesive includes an "A" component and a "B" component that are shipped in separate containers. When the components are mixed together in the proper ratios, these "two-parts" react with each other forming a cross-linked adhesive that gels in about an hour and obtains working strength in about 6 to 8 hours. In an exemplary example, the adhesive is mixed in a ratio of 100 parts by weight of "A" to 173 parts by weight of "B". The work life at 25EC is about 30 to 35 minutes. The mixed viscosity of the adhesive at 25EC is about 50000 mPas (50,000 cps). Preferably, after 254 hours of cure, the adhesive has a Shore A hardness of between 75 and 85 and an overlap shear strength on aluminum of between 5520 (800) and 8820 (1200), preferably at least 6900 kPa (1000 psi), and an overlap shear strength on PVC of between 2205 (300) and 3450 (500), preferably at least 2760 kPa (400 psi). These properties ensure that the adhesive retains the bond during back flushing.

The method of making the back-flushable spiral wound membrane element comprises the steps of forming the membrane filter layer sheet, cutting the membrane filter layer sheet to the desired length and placing a cut piece of the feed spacer sheet on top of the membrane filter layer sheet and to one side thereof. The width of the feed spacer sheet is approximately half the width of the membrane filter layer sheet. The membrane filter layer sheet is folded over the feed spacer so that the feed spacer sheet is sandwiched between two layers of the membrane filter layer sheet. The permeate carrier fabric sheet is then attached to the permeate collection tube via a double sided tape or other suitable means, and an adhesive seal is applied on the permeate carrier fabric at end farthest from the permeate collection tube and at the two sides thereof. The membrane filter layer sheet-feed spacer sheet sandwich is then positioned over the permeate carrier fabric sheet such that the adhesive seal bonds the membrane filter layer sheet to the permeate carrier fabric sheet. The layers are then wound around the permeate collection tube to form spiral wound membrane filtration element 15.

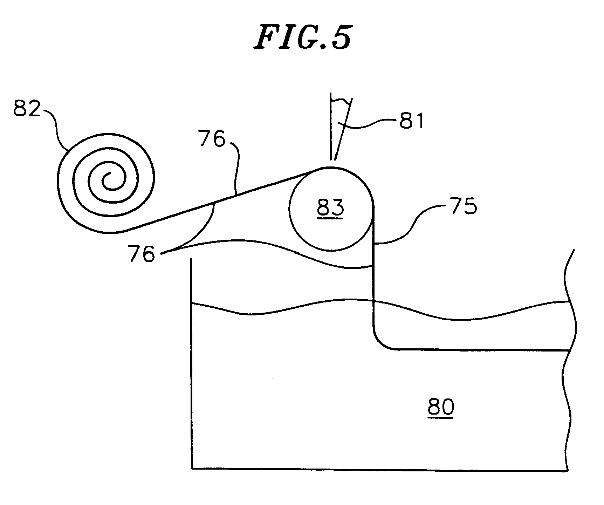

There are several ways to create the membrane filter layer sheet having membrane film 75 and support substrate 76. See FIG. 5. Polymers that are used to create the membrane film may be dissolved in solvents or applied as melted-homogenous films. The most common method for making the membrane filter layer sheet involves coating a polymer dissolved in a suitable solvent, such as dimethylformamide, 1,4 dioxane, acetone, or n-methyl pyrolidone, onto a support substrate. Membrane filter layer sheets that can withstand repeated cycles of back flushing must be created for either homogenous, or asymmetric designs. If the membrane film is cast where the support substrate is encased in the polymer matrix (homogeneous), a membrane filter layer sheet with excellent resistance to back-flushing is created. In the example, the membrane film is cast on top of the support substrate to form an asymmetric membrane filter layer sheet. For the asymmetric sheet, a sufficient bond must be created between the membrane film and the support substrate. FIG. 5 illustrates the process system wherein the membrane film is cast onto the support substrate as in the homogeneous or asymmetric membrane filter layer sheet. The homogeneous membrane filter layer sheet has a greater strength than the asymmetric sheet because the support substrate is encased in the polymer matrix, rather than polymer cast on top of the substrate. However, the processes in which homogeneous membrane filter layer sheets are used are limited. For example, the homogeneous membrane filter layer sheets function optimally with microfiltration and ultrafiltration processes.

A homogenous membrane is formed by coating a polymeric casting solution onto a support substrate, whereby the porosity of the support and the penetration of the casting solution allows the casting solution to completely penetrate the support fabric, thereby encapsulating the support fabric inside the membrane polymer. The coated membrane film is then allowed an amount of time to form a skin, before quenching the film in a fluid bath, preferably water. The initial solvent on the outside of the sheet is rapidly removed upon insertion into the bath. Leaving the sheet in the quench bath for a time allows the remainder of the solvent, that has not diffused out of the membrane, to be removed from the membrane layer sheet. Because of the chemistry of the casting solution, and the formation of the membrane skin, the finished membrane has a surface layer with small and uniform pores. This structure is homogeneous throughout the membrane structure, thus creating a higher resistance to fluid flow and requiring a greater pressure drop than a corresponding asymmetric membrane. Upon examination of this membrane layer sheet under a scanning electron microscope (SEM), it can be seen that the pore size at the membrane surface is small and uniform, and this structure is fairly uniform throughout the membrane cross section. This symmetry, or homogeneity, is where these membranes derive their name of homogenous membranes. The porosity of the support substrate is between 0.51 and 15.3 1/(m²·s) (0.1 and 3 cfm/ft²), preferably between 2.55 and 5.1 (0.5 and 1 cfm/ft²), with a thickness of between 0.0025 and 0.0125 cm (0.001" and 0.005"), preferably between 0.005 and 0.01 cm (0.002" and 0.004"), and a weight between 0.24 and 1.2 kg/m² (20 and 100 gm/yd²), preferably between 0.48 and 0.96 kg/m² (40 and 80 gm/yd²). The chemistry and physical properties of the casting solution are also important. The viscosity of the casting solution is between 50 and 300 mPas (50 and 300 centipoise (cps)), preferably between 100 and 200 mPas (cps), and is controlled by controlling the molecular weight of the polymer, the percentage of polymer dissolved in the solvent (between 7% and 18%, depending on the polymer used) and the casting solution temperature (between 0°C and 70°C, preferably between15°C and 40°C). To allow for complete penetration of the casting solution into the support fabric, the casting solution is applied at a rate between 0.015 and 0.15 m/s (3 and 30 fpm), preferably between 0.015 and 0.04 m/s (3 and 8 fpm), and with an air quench time between 5 and 60 seconds, preferably between 20 and 30 seconds. The advantage of homogenous membranes is that they are very resistant to back flushing due to the encapsulated design. They are more difficult to manufacture, due to the fact that an external support mechanism must be designed into the casting machine (FIG.5) to support the penetrated support substrate and transport the membrane to the quench tank. This can be accomplished by rotating a casting drum 83 or supporting the membrane on a continuous and porous conveyor. This is required because the penetrating casting solution will not allow the membrane to be pulled over a stationary drum prior to quenching.

An asymmetric membrane is formed by coating a polymeric casting solution onto a support substrate, whereby the porosity of the support and the penetration of the casting solution allows the casting solution to penetrate the surface of the support fabric but does not allow the casting solution to penetrate or bleed through the back of the support substrate. The coated membrane film is then allowed an amount of time to form a skin, and then is quenched in a fluid bath, preferably water, which allows the remainder of the solvent to be removed from the membrane layer sheet. Because of the chemistry of the casting solution, and the formation of the membrane skin, the finished membrane has a very dense surface layer with very small and uniform pores, while the inner layer that supports the surface membrane is much more porous or spongy. Due to the inner layer's high porosity, there is very little resistance to fluid flow, and only a minimum amount of pressure drop is created for flow of permeate through the membrane, making the asymmetric design preferable over the homogeneous design. Upon examination of this membrane layer sheet under a scanning electron microscope (SEM), it can be seen that the pore size at the membrane surface is very small and uniform, while the polymeric membrane underneath this thin surface layer has very large pores that resemble a spongy material. This lack of symmetry, or asymmetry, is where these membranes derive their name of asymmetric membranes. The porosity of the support substrate is between 5.07 and 50.7 1/(m²·s) (1 and 10 cfm/ft2), preferably between 7,5 and 15 1/(m²·s) (1.5 and 3cfm/ft²), with a thickness between 0.005 and 0.02 cm (0.002" and 0.008"), preferably between 0.0075 and 0.0125 cm (0.003" and 0.005"), and a weight between 0.24 and 1.2 kg/m² (20 and 100gm/yd2), preferably between 0.84 and 1.08 kg/m² (70 and 90gm/yd²). The chemistry and physical properties of the casting solution are also important. The viscosity of the casting solution is between 100 and 1000 mPas (centipoise -cps), preferably between 250 and 350 mPas (cps), and is controlled by controlling the molecular weight of the polymer, the percentage of polymer dissolved in the solvent (15% 25% depending on the polymer used), and the casting solution temperature (between 0°C and 70°C, preferably between 15°C and 40° C). To allow for some penetration of the casting solution into the support fabric, but to prevent bleed through, the casting solution is applied at a rate of between 0.025 and 0.25 m/s (5 and 50 fpm), preferably between 0.025 and 0.05 m/s (5 and 10 fpm), and with an air quench time between 5 and 60 seconds, preferably between 20 and 30 seconds. For most traditional applications, the asymmetric membranes are produced to have very uniform surface pores and adhesion of the membrane to the support substrate is of secondary concern. In the present invention the adhesion is created through the selection of polymers, both the fabric and the membrane, that create good chemical bonding, and allowing penetration of the polymer into the fabric support matrix to create additional mechanical interlocks to further aid in preventing delamination during the backflush cycle.

The process shown in FIG. 5 will now be described. A roll of substrate 82 is unwound and treated with polymeric casting solution 81. The thickness of the membrane film is controlled through the use of a mechanical device, either a doctor blade or a precision slot coater, through which the polymer-solvent casting solution 81 is applied as shown in FIG. 5. To effect a sufficient bond, it is preferable to allow between 5 and 60 seconds of air quench time (air contact of solution 81 while on the support substrate) prior to immersion in a quench bath 80.

Preferably, the air quench time is between 20 and 30 seconds. The polymer-solvent-support substrate matrix is first quenched in air to allow the formation of a thin skin, and then quenched in a suitable fluid 80, preferably water, to allow removal of solvent in solution81, thus producing a permeable membrane film. Once the solvent has been extracted from the membrane film, the membrane film may be further treated through heat or additional rinsing, drying, or additional coating, to obtain the final desired filtration properties. In the case of composite membranes, a secondary coating may also be applied on top to the membrane film to achieve nanofiltration or reverse osmosis type membranes.

Preferably, the capability of back-flushing is accomplished using a membrane film made from polymers such as polyethylene, polypropylene, or polysulfone. However, membrane films which may be employed include polyamides, polyphenylene esters, polyethersulfone, polysulfonamides, polyvinylidene fluoride, cellulose acetate, cellulose, polyacrylonitrile, or other film forming polymers.

Preferably, the support substrate 76 comprises a non-woven fabric. The support substrate characteristics vary depending on how whether the membrane film is cast on top of the support substrate or encased within the polymer matrix. For homogenous membrane filter layer sheets, a support substrate with a thickness of 0,0025 - 0,0125 cm (0.001 "-0.005"), but preferably 0,005 - 0,01 cm (0.002"-0.004") thick, has a Frazier air permeability of 5.07 and 50.7 1/(m²·s) (1 to 10 cubic feet per minute per square foot - cfm/ft²), preferably 15 to 30 l/(m²·s) (1.5 to 3.0 cfin/ft²), and a weight from 0.24 and 1.2 kg/m² (20-100 grams per square yard - gm/yd). For asymmetric membrane filter layer sheets, a support substrate with a thickness of 0,005 - 0,02 cm (0.002"-0.008"), but preferably 0,0075 - 0,0125 (0.003"-0.005") thick, has a Frazier air permeability of 5.07 and 50.7 1/(m²·s) (1.0 to 10.0 cfin/ft²), preferably 7,5 to 151/(m²·s) (1.5 to 3.0 cfm/ft²), and a weight from 0.24 and 1.2 kg/m² (20-100gm/yd²).

To further improve the penetration of the casting solution into the support substrate 76, the casting solution is applied at an elevated temperature in the range of 0°C to 70°C, but preferably between 15°C and 40°C. For proper adhesion of membrane film 75 to support substrate 76, the viscosity of the casting solution must be in the range of 100 to 1000 mPas (centipoise - cps), but preferably between 250-350 mPas (cps).

Several improved chemical, mechanical, and process conditions have been developed to achieve good mechanical and chemical bonding between membrane film 75 and support substrate 76. The high back pressures in back-flushing are essential to allow sufficient back flow of fluids to enable and assure membrane cleaning effectiveness. A combination of membrane polymer casting solution conditions and support substrate 76 properties result in a strongly bonded composite, sufficient to resist delamination under such high back pressures. Typically, ultrafiltration membranes have an air quench time of 1-2 seconds to minimize bleed through of the casting solution through the support substrate. In the present invention, the air quench time is between 5 and 60 seconds, but preferably between 20 and 30 seconds. If the time is too long, membrane film 75 will bleed through. The combination of a porous support substrate 76 that is not too highly calendered, a heated and relatively low viscosity casting solution, and an increased air quench time, creates an ultrafiltration membrane film 75 with sufficient mechanical and chemical bonding to the support substrate 76 to allow thousands of back-flush cycles at up to 100 psi without adversely affecting the membrane film transport properties. In the present invention, membrane filter layer sheet 71 is capable of withstanding back pressures of up to 690 kPa (100 psi) without delamination of membrane film 75 from support substrate 76, while maintaining the adhesive seal, and with no other adverse affects on membrane filter layer sheet 71 or element 15 performance properties.

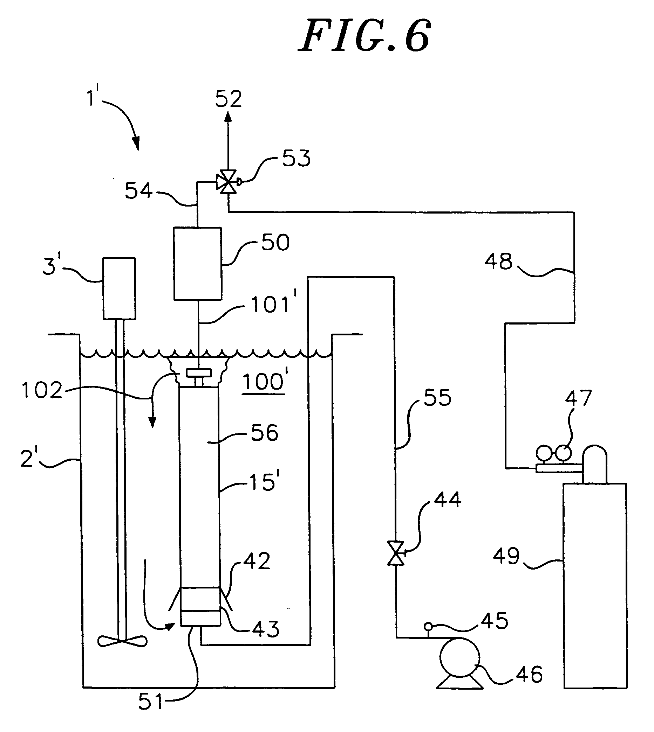

An embodiment of the present invention is shown in FIG. 6. A spiral element back-flush system 1' has a feed tank 2', an air pump 46, an element15', a vacuum system 52 and a compressed gas tank 49. Element 15' is preferably mounted in a vertical position. Feed tank 2' contains a feed solution100'that is kept well mixed via a mechanical stirrer 3'. The driving pressure to force feed solution 100' into element 15' is via vacuum system 52. Air pump 46 is used to promote turbulence at the surface of membrane filter layer sheets 71. Tank 49 uses compressed gas to back flush element 15'.

Pump 46 compresses gas, preferably air, through a feed pipe 55, a feed pressure control valve 44 and, eventually, into bubbler 51. A pressure gauge 45 along pipe 55 is used to measure the pressure from pump 46. Bubbler 51 creates a uniform distribution of fine bubbles 43 which are directed via a collector 42 into the bottom of membrane filter element 15. Bubbles 43 act as turbulence promoters at the surface of membrane filter layer sheet 71 (see FIG. 6) and help reduce the boundary layer thickness at the surface of membrane filter layer sheet 71. Bubbles 43 also create a convective flow of feed solution 100 from the bottom through the top of element 15', and back to the bottom again.

During normal operation, vacuum 52 is applied to permeate collection tube 73 through a first permeate diverter valve 53 and via a permeate pipe 54 to element 15'. Permeate pipe 54 preferably includes a permeate accumulator 50. Vacuum system 52 creates a driving pressure across membrane filter layer sheet 71 resulting in production of a permeate101'. Vacuum system 52 can be created by a vacuum pump, the suction side of a centrifugal pump, or an aspirator. The vacuum is preferably in the range of 0.007 to 0.04 bar (5 to 29 mm Hg).

In this embodiment, the portion of feed solution100'that permeates element 15' is permeate 101'. Permeate 101' passes through permeate accumulator 50, a first permeate diverter valve 53, and then, through vacuum system 52. Concentrate 102' is defined as the portion of feed solution 100' that does not pass through membrane filter element 15' and remains in feed tank 2' to be recycled back through filter 15'.

As shown in FIG. 6, the back-flush fluid is a combination of nitrogen gas from tank 49 and permeate 101'. The back-flush fluid may be air, nitrogen, or some other suitable gas, alone or in combination with the permeate fluid. System1'can also be designed to utilize only the permeate in the back-flush step. This preferred embodiment has the benefits of not requiring a pressure tube for element 15', uses an air pump to circulate feed solution 100' instead of a pump, and may result in lower membrane fouling due to the low feed pressure and the turbulence created by air bubbles 43.

During the back-flush cycle, the permeate diverter valve 53 is activated allowing the back-flush fluid to enter permeate collection tube 73. Nitrogen, from compressed gas tank 49, is fed through a pressure regulator 47. After passing through pressure regulator 47, nitrogen moves through a gas pipe 48, permeate diverter valve 53, and into the permeate pipe 54. Preferably, the initial back-flush fluid would be permeate 101' stored in accumulator50, followed by the nitrogen gas. The use of nitrogen gas as back flush fluid results in increased turbulence on the surface of membrane filter layer sheet 71, further aiding in the removal of foulants. After a set period of time, permeate diverter valve 53 is again activated and system1'returns to normal operation. This process of creating permeate 101' through vacuum system 52 and periodic back-flushing is repeated on a regular basis to maintain a steady state flux rate through membrane filter element 15'.

The following examples serve to further illustrate the invention, but should not be construed as in any way limiting the broader aspects thereof.

### EXAMPLE 1

An ultrafiltration membrane film to be used in a system according to the present invention was cast on a support substrate that was porous enough to allow good penetration of the casting solution into the support substrate structure to insure a good mechanical bond, but not too porous as to allow excessive bleed through of the casting solution. The substrate polymer also had to have good chemical affinity for the membrane casting solution. Although there may be other substrates that could perform this function, we obtained excellent results with a dry lay polyester non-woven substrate, with a weight of 0,96 kg/m² (80 grams per square yard), 0,01 cm (0.004") thick, and a Frazier air permeability of 7,5 to 15 l/(m²·s) (1.5 to 3 cubic feet per minute per square foot - cfm/ft²). The Frazier air permeability is a measure of the porosity of the substrate. These substrates are produced using short polyester fibers that are "carded" into felts that are relatively thick, and then are "calendered" between a steel and felt roll under high pressure and temperature to obtain the proper porosity, thickness, and weight. Many substrates used in these applications are highly "calendered" resulting in a support substrate having a paper-like finish. While this type of a finish gives a uniform coating surface with few defects and small pores, the dense, paper like finish makes it difficult for the casting solution to penetrate, and as a result, the membrane film is easily delaminated.

In this example, we cast an ultrafiltration membrane film using a 18% BASF polyethersulfone polymer dissolved in 23% DMF and 55% NMP, to give a mixed viscosity of 320 centipoise. This formulation gave good penetration and adhesion to the support substrate, and was coated at a thickness of 0,007 cm (0.0028").

To further improve the penetration of the casting solution into the support substrate, the casting solution was applied at an elevated temperature of 30°C. The casting solution was then allowed an air quench time of 26 seconds prior to immersion in the solvent extraction bath which was chilled to 10°C. The membrane filter layer sheet was cast at 0,04 m/s (8 feet per minute - fpm). The membrane filter layer sheet was then fed into a heat treat tank filled with 65°C water to anneal and heat set the membrane filter layer sheet. The membrane filter layer sheet was tested under 207 kPa (30 psi) of pressure with 500 ppm of a 76,000 MW dextran solution. The membrane filter layer sheet exhibited a flux of 30 GFD at 97 % rejection.

This membrane filter layer sheet was then wound into two spiral elements with a 6,25 cm (2.5") diameter and a length of 35cm (14") long using the custom formulated adhesive.

The element was then placed in a FRP pressure tube tested with a solution ofDI water and a mixture of hexamethylene tetramine and hydrazine sulfate. This mixture forms uniform and well distributed suspended particles in the 1-5 micron range and is used as a standard for turbidity measurements. The feed turbidity was maintained between 50 and 100 NTU. This feed solution was pressurized with a feed pump to 207 kPa (30 psi) and fed to the two 2514 elements. The elements exhibited a combined permeate flow of 1.2 liters per minute and produced a permeate turbidity of 0.1NTU's. The permeate turbidity was used as an indicator of membrane integrity. If the membrane integrity was compromised during the back-flush cycles, the permeate turbidity would increase. The element was then run on standard tap water at 207 kPa (30 psi) during the feed. Every 30 seconds, the element was back-flushed with nitrogen at 103 kPa (15 psi) for 15 seconds. This cycle was repeated for 2030 cycles. The element was then retested with the hexamethylene tetramine and hydrazine sulfate turbidity standard and exhibited a combined permeate flow of 1.1 lpm and a permeate turbidity of 0.1 NTU's. This test indicates that the membrane filter layer sheet and element maintained their integrity during this test and did not delaminate.

### EXAMPLE 2

A microfiltration membrane film was cast on a support substrate as in Example 1. However, in this example, a BASF polyvinylidene fluoride polymer was dissolved in 80% DMF, to give a mixed viscosity of 350 mPas (centipoise). This formulation gave good penetration and adhesion to the support substrate.

To further improve the penetration of the casting solution into the support substrate, the casting solution was applied at an elevated temperature of 30°C. The casting solution was then allowed an air quench time of 20 seconds prior to immersion in the solvent extraction bath. The membrane filter layer sheet was tested under 69 kPa (10 psi) of pressure with 500 ppm of hexamethylene tetramine and hydrazine sulfate turbidity standard. The membrane filter layer sheet exhibited a flux of 35 GFD at 10 psi and the permeate produced had a turbidity of < 0.1 NTU.

This membrane filter layer sheet was then wound into two spiral elements with a 6,25 cm (2.5") diameter and a length of 35 cm (14") long using the E. V. Roberts 1752 adhesive. The element was then placed in a FRP pressure tube tested with a solution of hexamethylene tetramine and hydrazine sulfate turbidity standard at 207 kPa (30 psi). The element exhibited a flux of 35 (l/m²h) GFD and a permeate turbidity of 0.2 NTU. The element was then run on standard tap water at 69 kPa (10 psi) in a back-flush cycle. Every 30 seconds, the element was back-flushed with nitrogen at 207 kPa (30 psi) for 15 seconds. This cycle was repeated for 1236 cycles. The element was then retested with the hexamethylene tetramine and hydrazine sulfate turbidity standard at 69 kPa (10 psi) and exhibited 34 GFD and a permeate turbidity of < 0.1 NTU. This example indicates that the membrane filter layer sheet and element maintained their integrity during this test and did not delaminate.

### EXAMPLE 3

The test of Example 1 was repeated using the same element but with an increased backflush pressure of 207 kPa (30 psi). The element was then placed in a FRP pressure tube tested with a solution of DI water and a mixture of hexamethylene tetramine and hydrazine sulfate. The feed turbidity was maintained between 50 and 100 NTU. The elements exhibited a combined permeate flow of 1.4 liters per minute and produced a permeate turbidity of 0.1NTU's. This cycle was repeated for 1400 cycles. The element was then retested with the hexamethylene tetramine and hydrazine sulfate turbidity standard and exhibited a combined permeate flow of 1.5 lpm and a permeate turbidity of 0.2 NTU's. This test indicates that the membrane filter layer sheet and element maintained their integrity during this test and did not delaminate.

### EXAMPLE 4

The test of Example 1 was repeated using the same element but with an increased back flush pressure of 311 kPa (45 psi). The element was then placed in a FRP pressure tube tested with a solution ofDI water and a mixture of hexamethylene tetramine and hydrazine sulfate. The feed turbidity was maintained between 50 and 100 NTU. The elements exhibited a combined permeate flow of 1.7 liters per minute and produced a permeate turbidity of 0.5 NTU's. This cycle was repeated for 1000 cycles. The element was then retested with the hexamethylene tetramine and hydrazine sulfate turbidity standard and exhibited a combined permeate flow of 1.6 lpm and a permeate turbidity of 0.15NTU's. This test indicates that the membrane filter layer sheet and element maintained their integrity during this test and did not delaminate.

### EXAMPLE 5

The test of Example 1 was repeated using the same element but with an increased backflush pressure of 414 kPa (60 psi). The element was then placed in a FRP pressure tube tested with a solution of DI water and a mixture of hexamethylene tetramine and hydrazine sulfate. The feed turbidity was maintained between 50 and 100 NTU. The elements exhibited a combined permeate flow of 1.6 liters per minute and produced a permeate turbidity of 0.1 NTU's. This cycle was repeated for 620 cycles. The element was then retested with the hexamethylene tetramine and hydrazine sulfate turbidity standard and exhibited a combined permeate flow of 1.6 lpm and a permeate turbidity of 0.10 NTU's. This test indicates that the membrane filter layer sheet and element maintained their integrity during this test and did not delaminate. At the conclusion of the test, three small pinholes were punctured into one of the membrane filter elements to determine the sensitivity of the turbidity test. The element was retested with a solution of DI water and a mixture of hexamethylene tetramine and hydrazine sulfate with a feed turbidity of 55 NTU's and the permeate turbidity was 7.7NTU's. This indicates that the turbidity test is a sensitive indicator of element integrity.

### EXAMPLE 6

A 10 cm (4") diameter by 100 cm (40") long element was produced using the preferred membrane filter layer sheet and the preferred adhesive as in Example 1. The element was placed in a well stirred tank containing a mixture of 0.5 % diatomaceous earth and 500 ppm dextran with a molecular weight of between 5-20 million daltons as a synthetic fouling solution, which had a turbidity above 100 NTU. The permeate collection tube was connected to a vacuum system that maintained a vacuum of 40 cm (16 inches) of mercury (in Hg) to provide the driving pressure for permeation of the feed solution through the membrane filter layer sheet. The element exhibited an initial flux of 13 GFD and the permeate turbidity was < 0.1 NTU, indicating good mechanical integrity. Under the element, as shown in FIG. 6, air bubbles were produced using a porous sintered metal plate. Air was supplied using a low pressure air blower operating at a pressure of 5cm (2 inches) of water (in H₂O) to circulate the feed solution across the surface of the membrane filter layer sheet and promote turbulence to minimize the boundary layer thickness. The element was operated for 30 minutes and then back-flushed with permeate for 5 seconds followed by air for 15 seconds. This operation was repeated for 14 days of operation. The element exhibited a flux of 12 GFD after the 14 days of operation. The turbidity of the permeate was < 0.1 NTU indicating that the element integrity had not been compromised. The same element was then operated under the same conditions but without the back-flush cycle. After 5 days of operation, the flux had declined to 4 GFD. This example indicates that the back-flush cycle is beneficial in removing foulants from the surface of the membrane filter layer sheet.

### EXAMPLE 7 not according to the invention

A 10 cm (4") diameter by 100 cm (40") long element was produced using the preferred membrane filter layer sheet and adhesive as in Example 1. The element was placed into a vertically mounted pressure tube with the feed solution entering the bottom of the pressure tube and the concentrate being removed from the top of the pressure tube as shown in FIG. 1. The element exhibited an initial flux of 8 GFD and the permeate turbidity was < 0.1 NTU, indicating good mechanical integrity. The feed was pressurized to 104 kPa (15 psi) during the trial. The element is operated in this mode for 30 minutes and is then back-flushed with permeate for 5 seconds followed by a back flush of 15 seconds with nitrogen. During the back-flush the three-way valves are activated allowing the foulants that are back-flushed from the element to exit from the bottom of the pressure tube and also allowing the feed solution to enter the top of the pressure tube. This reverse flow allows gravity to help in removing foulants and suspended solids from the element and pressure tube during back-flush cycle. This operation was repeated for 14 days of operation. The element exhibited a flux of 7 GFD after 14 days of operation. The turbidity of the permeate was <0.1 NTU indicating that the element integrity had not been compromised. The same element was then operated under the same conditions but without the back-flush cycle. After 4 days of operation, the flux had declined to 3 GFD. This example indicated that the back-flush cycle is beneficial in removing foulants from the surface of the membrane filter layer sheet.

The preceding description indicates the preferred embodiments of the present invention, but it is not limited to the designs shown. Therefore, the present invention is not intended to be limited to the working embodiments described above. Thus, it will be understood that within the scope of the following claims, this invention may be practiced otherwise than as specifically described.

## Claims

1. A back-flush system for a spiral wound membrane element comprising:
a feed tank (2') having feed solution;
a permeate collection tube placed in the feed tank, wherein the permeate collection tube includes a spiral wound membrane element (15') having a permeate carrier sheet (72), a feed spacer sheet (70), and a membrane filter layer sheet (71) with a supporting substrate and a membrane film superimposed on the supporting substrate;
a bubbler (51) having bubbles acting as turbulence promoters at the surface of the membrane filter layer sheet for reducing the boundary layer thickness at the surface of the membrane filter layer sheet, and creating a convective flow of feed solution from the bottom through the top of the element (15'), and returning back to the bottom;
a source of pressurized back flush fluid (49) used in forcing permeate and back flush fluid back to the element (15'); and
a vacuum system (52) having a vacuum for creating the driving pressure to force the feed solution into the element (15') thereby creating permeate.

2. The back-flush system of claim 1 further comprising:
an air pump (46) for compressing gas for the bubbler (51), and
a permeate diverter valve (53), wherein the permeate diverter valve is capable of controlling permeate flow and reversing the permeate flow to back-flush any foulants from the surface of the membrane filter layer sheet.

3. The back-flush system of claim 2 further comprising a cycle of back flushing;
wherein the duration of the back flush cycle is 5 to 30 seconds;
wherein in between back flush cycles, the permeate diverter valve is activated to return the system to extracting permeate from the feed solution.

4. The back-flush system of claim 1 wherein the back flush fluid comprises at least one of compressed gas, air, nitrogen, permeate, and cleaning solution.

5. The back-flush system of claim 1 wherein the back flush fluid comprises permeate followed by compressed air.

6. The back-flush system of claim 1 wherein the vacuum is in the range of 0,007 to 0,04 bar (5 to 29 mm Hg).

7. A method of back-flushing a spiral wound membrane element through a back-flush system according to claim 1 comprising:
placing a spiral wound membrane element into a feed tank;
promoting turbulence at a surface of the membrane filter layer sheet through a bubbler having bubbles which are capable of:
reducing a boundary layer thickness at the surface of the membrane filter layer sheet;
creating a convective flow of feed solution from a bottom through a top of the element; and
returning the feed solution back to the bottom of the element; and
introducing on a periodic basis a pressurized back flush fluid, with a pressure that exceeds the feed pressure, into the element in a direction from top to bottom of the element to dislodge a substantial portion of feed solution solids retained on pores of the membrane filter layer sheet.

8. The method of claim 7 further comprising:
compressing gas for the bubbler using an air pump;
creating the driving pressure to force the feed solution into the element thereby creating permeate using a vacuum system having a vacuum;
directing the flow rate of permeate out of the permeate accumulator and the flow rate of gas out of the tank while back-flushing using a permeate diverter valve;
activating a permeate diverter valve allowing back flush fluid to enter the element to back-flush the feed solution solutions foulants from the surface of the membrane filter layer sheet in the element.

9. The method of claim 7 wherein the pressure on the back-flush gas is controlled by a gas regulator; and the back-flush pressure is greater than the feed pressure on the element by between 0,7 and 2,1 bar (10 and 30 psi).

10. The method of claim 7 wherein the pressure from the back flush fluid on the element is between 0,34 and 6,7 bar (5 and 100 psi).

11. The method of claim 10 wherein the pressure from the back flush fluid on the element is between 1,4 and 4,1 bar (20 and 60 psi).

12. The method of claim 7 wherein the back flush fluid comprises at least one of compressed gas, air, nitrogen, permeate, and cleaning solution.

13. The method of claim 7 wherein the back flush fluid comprises permeate followed by compressed air.

## Patentansprüche

1. Rückspülungssystem für ein spiralförmig gewickeltes Membranelement, umfassend:
einen Speisetank (2') mit Speiselösung;
ein in dem Speisetank plaziertes Permeatsammelrohr, wobei das Permeatsammelrohr ein spiralförmig gewickeltes Membranelement (15') mit einer Permeatträgerfolie (72), einer Speiseabstandshalterfolie (70) und einer Membranfilterschichtfolie (71) mit einem tragenden Substrat und einem dem tragenden Substrat überlagerten Membranfilm enthält;
eine Gaswaschflasche (51) mit Blasen, die als Turbulenzförderer an der Oberfläche der Membranfilterschichtfolie dienen, um die Grenzschichtdicke an der Oberfläche der Membranfilterschichtfolie zu reduzieren, und eine konvektive Strömung von Speiselösung von dem Boden bis zur Oberseite des Elements (15') erzeugen und zum Boden zurückführen;
eine Quelle von unter Druck stehendem Rückspülungsfluid (49), das verwendet wird, um Permeat und Rückspülungsfluid zurück zum Element (15') zu drücken; und
ein Vakuumsystem (52) mit einem Vakuum zum Erzeugen des Antriebsdrucks zum Drücken der Speiselösung in das Element (15'), wodurch Permeat erzeugt wird.

2. Rückspülungssystem nach Anspruch 1, weiterhin umfassend:
eine Luftpumpe (46) zum Komprimieren von Gas für die Gaswaschflasche (51) und
ein Permeatumleitventil (53), wobei das Permeatumleitventil in der Lage ist, die Permeatströmung zu steuern und die Permeatströmung umzukehren, um etwaige Schmutzstoffe von der Oberfläche der Membranfilterschichtfolie rückzuspülen.

3. Rückspülungssystem nach Anspruch 2, weiterhin umfassend einen Rückspülungszyklus;
wobei die Dauer des Rückspülungszyklus 5 bis 30 Sekunden beträgt;
wobei zwischen den Rückspülungszyklen das Permeatumleitventil aktiviert wird, um das System dorthin zurückzuführen, daß Permeat aus der Speiselösung extrahiert wird.

4. Rückspülungssystem nach Anspruch 1, wobei das Rückspülungsfluid mindestens komprimiertes Gas, Luft, Stickstoff, Permeat und/oder Reinigungslösung umfaßt.

5. Rückspülungssystem nach Anspruch 1, wobei das Rückspülungsfluid Permeat gefolgt von komprimierter Luft umfaßt.

6. Rückspülungssystem nach Anspruch 1, wobei das Vakuum im Bereich von 0,007 bis 0,04 bar (5 bis 29 mm Hg) liegt.

7. Verfahren zum Rückspülen eines spiralförmig gewickelten Membranelements durch ein Rückspülungssystem nach Anspruch 1, umfassend:
Plazieren eines spiralförmig gewickelten Membranelements in einem Speisetank;
Fördern von Turbulenzen an einer Oberfläche der Membranfilterschichtfolie durch eine Gaswaschflasche mit Blasen, die zu folgendem in der Lage sind:
Reduzieren einer Grenzschichtdicke an der Oberfläche der Membranfilterschichtfolie;
Herstellen einer konvektiven Strömung von Speiselösung von einem Boden bis zu einer Oberseite des Elements und
Zurückführen der Speiselösung zum Boden des Elements und
Einleiten eines unter Druck stehenden Rückspülungsfluids auf periodischer Basis mit einem Druck, der den Speisedruck übersteigt, in das Element in einer Richtung von der Oberseite zur Unterseite des Elements zum Lösen eines substantiellen Teils von Speiselösungsfeststoffen, die an Poren der Membranfilterschichtfolie festgehalten werden.

8. Verfahren nach Anspruch 7, weiterhin umfassend:
Komprimieren von Gas für die Gaswaschflasche unter Verwendung einer Luftpumpe;
Erzeugen des Antriebsdrucks, um die Speiselösung in das Element zu drücken, um **dadurch** unter Verwendung eines Vakuumsystems mit einem Vakuum ein Permeat herzustellen;
Lenken der Strömungsrate von Permeat aus dem Permeatakkumulator heraus und der Strömungsrate des Gases aus dem Tank heraus während des Rückspülens unter Verwendung eines Permeatumleitventils;
Aktivieren eines Permeatumleitventils, was es gestattet, daß Rückspülungsfluid in das Element eintritt, um die Speiselösungsschmutzstoffe von der Oberfläche der Membranfilterschichtfolie in dem Element rückzuspülen.

9. Verfahren nach Anspruch 7, wobei der Druck auf das Rückspülungsgas durch einen Gasregler gesteuert wird, und der Rückspülungsdruck um zwischen 0,7 und 2,1 bar (10 und 30 psi) größer ist als der Speisedruck auf das Element.

10. Verfahren nach Anspruch 7, wobei der Druck von dem Rückspülungsfluid auf das Element zwischen 0,34 und 6,7 bar (5 und 100 psi) liegt.

11. Verfahren nach Anspruch 10, wobei der Druck von dem Rückspülungsfluid auf das Element zwischen 1,4 und 4,1 bar (20 und 60 psi) liegt.

12. Verfahren nach Anspruch 7, wobei das Rückspülungsfluid mindestens komprimiertes Gas, Luft, Stickstoff, Permeat und/oder Reinigungslösung umfaßt.

13. Verfahren nach Anspruch 7, wobei das Rückspülungsfluid Permeat gefolgt von komprimierter Luft umfaßt.

## Revendications

1. Système de rinçage par écoulement inverse d'un élément de membrane enroulé en spirale, comprenant :
un réservoir d'alimentation (2') ayant une solution d'alimentation ;
un tube collecteur de perméat placé dans le réservoir d'alimentation, dans lequel le tube collecteur de perméat comprend un élément de membrane enroulé en spirale (15') comportant une feuille de support de perméat (72), une feuille d'espacement d'alimentation (70) et une feuille formant couche de filtre à membrane (71) avec un substrat de support et une pellicule de membrane superposée au substrat de support ;
un barboteur (51) ayant des bulles agissant comme des promoteurs de turbulence au niveau de la surface de la feuille formant couche de filtre à membrane pour réduire l'épaisseur de la couche limite au niveau de la surface de la feuille formant couche de filtre à membrane, et créer un flux convectif de solution d'alimentation allant du bas jusqu'en haut de l'élément (15') et retournant jusqu'en bas ;
une source de fluide de rinçage par écoulement inverse sous pression (49) servant à repousser le perméat et le fluide de rinçage par écoulement inverse vers l'élément (15') ; et
un système de vide (52) ayant un vide permettant de créer la pression d'entraînement destinée à pousser la solution d'alimentation dans l'élément (15') afin de créer le perméat.

2. Système de rinçage par écoulement inverse selon la revendication 1, comprenant en outre :
une pompe à air (46) destinée à comprimer un gaz pour le barboteur (51) et
un inverseur de perméat (53), dans lequel l'inverseur de perméat peut commander un débit du perméat et inverser le débit du perméat pour rincer par écoulement inverse d'éventuels agents de colmatage à partir de la surface de la feuille formant couche de filtre à membrane.

3. Système de rinçage par écoulement inverse selon la revendication 2, comprenant en outre un cycle de rinçage par écoulement inverse ;
dans lequel le cycle de rinçage par écoulement inverse dure de 5 à 30 secondes ;
dans lequel, entre les cycles de rinçage par écoulement inverse, l'inverseur de perméat est activé pour renvoyer le système à une extraction du perméat à partir de la solution d'alimentation.

4. Système de rinçage par écoulement inverse selon la revendication 1, dans lequel le fluide de rinçage par écoulement inverse comprend au moins un élément parmi un gaz comprimé, l'air, l'azote, un perméat et une solution de nettoyage.

5. Système de rinçage par écoulement inverse selon la revendication 1, dans lequel le fluide de rinçage par écoulement inverse comprend un perméat suivi d'air comprimé.

6. Système de rinçage par écoulement inverse selon la revendication 1, dans lequel le vide se situe dans une plage de 0,007 à 0,04 bar (de 5 à 29 mm Hg).

7. Procédé pour rincer par écoulement inverse un élément de membrane enroulé en spirale à travers un système de rinçage par écoulement inverse selon la revendication 1, consistant à :
placer un élément de membrane enroulé en spirale dans un réservoir d'alimentation ;
promouvoir une turbulence au niveau d'une surface de la feuille formant couche de filtre à membrane par l'intermédiaire d'un barboteur ayant des bulles susceptibles de :
réduire une épaisseur de couche limite au niveau de la surface de la feuille formant couche de filtre à membrane ;
créer un flux convectif de solution d'alimentation du bas jusqu'en haut de l'élément ; et
renvoyer la solution d'alimentation jusqu'en bas de l'élément ; et
introduire de façon périodique un fluide de rinçage par écoulement inverse sous pression, avec une pression supérieure à la pression d'alimentation, dans l'élément, dans le sens de haut en bas de l'élément afin de déloger une partie importante des matières solides de la solution d'alimentation retenues sur les pores de la feuille formant couche de filtre à membrane.

8. Procédé selon la revendication 7, consistant en outre à :
comprimer un gaz pour le barboteur au moyen d'une pompe à air ;
créer la pression d'entraînement destinée à pousser la solution d'alimentation dans l'élément afin de créer un perméat au moyen d'un système de vide ayant un vide ;
amener le débit de perméat à sortir de l'accumulateur de perméat et le débit de gaz à sortir du réservoir pendant le rinçage par écoulement inverse au moyen d'une vanne inverseuse de perméat ;
activer une vanne inverseuse de perméat permettant au fluide de rinçage par écoulement inverse de pénétrer dans l'élément pour rincer les agents de colmatage de la solution d'alimentation à partir de la surface de la feuille formant couche de filtre à membrane dans l'élément.

9. Procédé selon la revendication 7, dans lequel la pression du gaz de rinçage par écoulement inverse est commandée par un détendeur de gaz ; et la pression de rinçage par écoulement inverse est supérieure à la pression d'alimentation de l'élément d'entre 0,7 et 2,1 bar (entre 10 et 30 psi).

10. Procédé selon la revendication 7, dans lequel la pression du fluide de rinçage par écoulement inverse sur l'élément est située entre 0,34 et 6,7 bar (entre 5 et 100 psi).

11. Procédé selon la revendication 10, dans lequel la pression du fluide de rinçage par écoulement inverse sur l'élément est située entre 1,4 et 4,1 bar (entre 20 et 60 psi).

12. Procédé selon la revendication 7, dans lequel le fluide de rinçage par écoulement inverse comprend au moins un élément parmi un gaz comprimé, l'air, l'azote, un perméat et une solution de nettoyage.

13. Procédé selon la revendication 7, dans lequel le fluide de rinçage par écoulement inverse comprend un perméat suivi d'air comprimé.
